(19) Europäisches Patentamt
European Patent Office
Office européen des brevets

(11) **EP 4 386 033 A1**

(12) # EUROPEAN PATENT APPLICATION
published in accordance with Art. 153(4) EPC

(43) Date of publication:
**19.06.2024 Bulletin 2024/25**

(21) Application number: **22856050.4**

(22) Date of filing: **20.07.2022**

(51) International Patent Classification (IPC):
***C08G 63/16*** *(2006.01)* ***C08G 63/183*** *(2006.01)*
***C08G 63/85*** *(2006.01)* ***D01F 6/62*** *(2006.01)*

(52) Cooperative Patent Classification (CPC):
**C08G 63/16; C08G 63/183; C08G 63/85; D01F 6/62**

(86) International application number:
**PCT/KR2022/010643**

(87) International publication number:
**WO 2023/018049 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2021 KR 20210104661**

(71) Applicant: **Toray Advanced Materials Korea Inc.**
**Gumi-si, Gyeongsangbuk-do 39389 (KR)**

(72) Inventors:
- **HAN, Song Jung**
  **Gumi-si, Gyeongsangbuk-do 39389 (KR)**
- **KIM, Do Hyun**
  **Gumi-si, Gyeongsangbuk-do 39389 (KR)**
- **CHOI, Jung Hyeon**
  **Gumi-si, Gyeongsangbuk-do 39389 (KR)**
- **LEE, Jeong Hwan**
  **Gumi-si, Gyeongsangbuk-do 39389 (KR)**

(74) Representative: **Piticco, Lorena**
**Isler & Pedrazzini AG**
**Giesshübelstrasse 45**
**Postfach 1772**
**8027 Zürich (CH)**

(54) **POLYESTER RESIN AND METHOD FOR PREPARING SAME, AND THERMALLY ADHESIVE POLYESTER FIBER PREPARED THEREFROM**

(57) The present invention relates to a low-melting polyester resin, a method for preparing same, and a thermally adhesive polyester fiber prepared therefrom, and specifically, to a low-melting polyester resin having high transparency and remarkably low harmfulness to the human body, a method for preparing same, and a thermally adhesive polyester fiber prepared using same.

[Fig. 1]

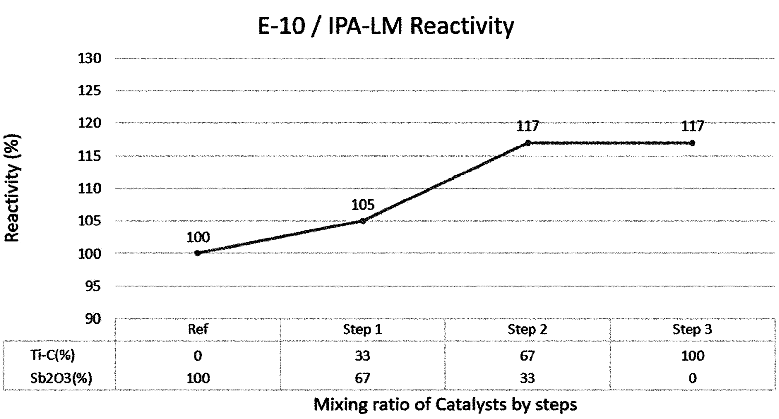


EP 4 386 033 A1

## Description

[Technical Field]

The present invention relates to a low-melting-point polyester resin, a method of preparing the same, and a thermo-adhesive polyester fiber manufactured from the same, and specifically, to a low-melting-point polyester resin having high transparency and significantly low harmfulness to the human body, a method of preparing the same, and a thermo-adhesive polyester fiber manufactured using the same.

[Background Art]

Polyester is a commercially important polymer material that is not only the most widely used synthetic fiber material today but also is used as a material for various plastic products due to its excellent mechanical properties, chemical stability, high melting point, and the like. Much research has been conducted to expand the scope of application of PET. Particularly, attempts have been continuously made to improve various properties and productivity by synthesizing PET having a high degree of polymerization and a low carboxyl group content in a shorter period of time.

Meanwhile, polyester resin undergoes, for example, an esterification reaction, followed by melting and polycondensation reactions. In the polycondensation reaction, catalysts are generally used, and on an industrial scale, antimony (Sb) compounds or germanium (Ge) compounds are mostly used. However, the polyester resin obtained by polycondensation using an antimony compound as a catalyst has problems of exhibiting a characteristic black color and causing toxicity and environmental damage which are problems with antimony compounds, and the polyethylene terephthalate resin obtained by polycondensation using a germanium compound as a catalyst has the disadvantage of increasing manufacturing costs due to the high price of the germanium compound itself even though this resin is preferable to the resin obtained using an antimony-based catalyst in terms of color transparency or toxicity. Accordingly, there is a strong desire for the emergence of polyester polycondensation catalysts that can replace the above catalysts.

For this reason, various compounds have been proposed as catalysts to replace the antimony compounds or germanium compounds. Among them, several types of titanium (Ti) compounds have been proposed due to being inexpensive and having no toxicity. However, the polyester resin obtained using a titanium compound as a catalyst has the drawback of exhibiting a characteristic yellow color and producing a large amount of by-products such as acetaldehyde and the like because a decomposition reaction occurs during polycondensation or melt-molding due to low thermal stability. Accordingly, there is a need for the development of a method of preparing a polyester resin, which is capable of improving the color tone, thermal stability, and the like of the resulting polyester resin and reducing an acetaldehyde content.

Meanwhile, since polyester has a relatively high melting point, an adhesive containing formalin (aqueous formaldehyde solution) or an organic solvent and a hard resin (phenolic resin, melamine resin, urea resin) are generally used in hardening fiber structures. The organic solvent-containing adhesive does not penetrate into the inside of fabric, so adhesiveness is low and tactile sensation is poor. Also, most of the adhesives are highly volatile and harmful to the human body, and when a large amount of copolymerization raw material is added to maintain adhesiveness at low temperature, a glass transition temperature is excessively decreased, and thus strength and high-temperature durability are degraded. For this reason, it is difficult to use the adhesive in fields that require high-temperature stability.

[Related Art Documents]

(Patent Document 0001) Korean Registered Patent No. 10-1834666 (2018.02.26.)

[Disclosure]

[Technical Problem]

The present invention has been devised to solve the above-described problems of the background art, and is directed to providing a polyester resin, which is capable of manufacturing a polyester fiber that has significantly low harmfulness to the human body and has excellent color transparency and strength, and a method of preparing the same.

The present invention is also directed to providing a thermo-adhesive polyester fiber that has low harmfulness to the human body, excellent color transparency and strength and is capable of limiting the use of a harmful solvent by having thermal adhesiveness instead of chemical bonding.

[Technical Solution]

One aspect of the present invention provides a polyester resin including a copolyester which is formed by polycondensation of an acid component including terephthalic acid (TPA); and a diol component including ethylene glycol and further including a diol compound represented by the following Chemical Formula 1 and has a terminal carboxyl group (-COOH) content of 45 eq./$10^6$ g or less, wherein the polyester resin includes antimony (Sb) in an amount of 10 ppm or less.

[Chemical Formula 1]

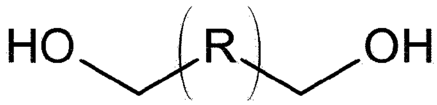

In Chemical Formula 1 and Chemical Formula 2, R is $-(C(CH_3)_aH_{2-a})-$ or $-(CH_2OCH_2)-$, wherein a is 1 or 2.
In an exemplary embodiment of the present invention, the acid component may further include $C_{6\sim14}$ aromatic polycarboxylic acids and $C_{2\sim14}$ aliphatic polycarboxylic acids in addition to terephthalic acid.
In an exemplary embodiment of the present invention, the polyester resin may include titanium (Ti) in an amount of 5 ppm to 30 ppm.
In an exemplary embodiment of the present invention, the polyester resin may have a melting point ($T_m$) of 220 °C to 255 °C and a glass transition temperature ($T_g$) of 60 °C to 75 °C.
In an exemplary embodiment of the present invention, the acid component may include terephthalic acid in an amount of 80 mol% or more, and the diol component may include ethylene glycol in an amount of 60 mol% to 90 mol%.
In an exemplary embodiment of the present invention, the polyester resin may include a mixture of blue and red dyes as a complementary coloring agent in an amount of 1 ppm to 10 ppm.
Another aspect of the present invention provides a method of preparing a polyester resin, which includes performing a polycondensation reaction of an acid component including terephthalic acid and further including one or more of $C_{6\sim14}$ aromatic polycarboxylic acids and $C_{2\sim14}$ aliphatic polycarboxylic acids; and a diol component including ethylene glycol and further including a diol compound represented by the following Chemical Formula 1 in the presence of a catalyst including a compound represented by the following Chemical Formula 2.

[Chemical Formula 1]

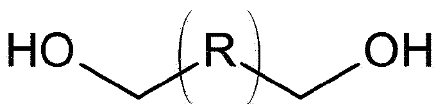

[Chemical Formula 2]

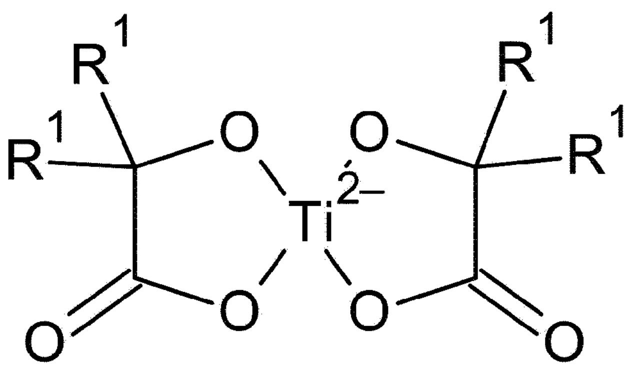

In Chemical Formula 1, R is $-(C(CH_3)_aH_{2-a})-$ or $-CH_2OCH_2-$, wherein a is 1 or 2, and in Chemical Formula 2, $R^1$ is $-(CH_2)_nCOOH$, wherein n is 1 to 8.
In an exemplary embodiment of the present invention, the polycondensation reaction may be performed by

adding the catalyst to the reactants so that a titanium atom content is 10 ppm to 20 ppm.

In an exemplary embodiment of the present invention, the polycondensation reaction may be performed by adding the acid component and the diol component in a molar ratio of 1: 1 to 1:1.5.

Still another aspect of the present invention provides a thermo-adhesive polyester fiber manufactured by spinning the above-described polyester resin according to the present invention and having a b value of 2.5 to 8 in the L*a*b color system.

[Advantageous Effects]

A polyester resin according to the present invention can exhibit high stability due to having a low level of substances harmful to the human body, excellent transparency, and thermal adhesiveness due to having a low glass transition temperature.

A thermo-adhesive polyester fiber according to the present invention can exhibit excellent aesthetics due to having low harmfulness to the human body and excellent transparency compared to a conventional polyester fiber polymerized using a non-antimony-based catalyst. Also, it can have thermal adhesiveness due to having a low glass transition temperature, thereby avoiding chemical bonding. Therefore, the thermo-adhesive polyester fiber is safe and not harmful.

[Description of Drawings]

FIG. 1 is a graph of comparing reactivity when a polycondensation reaction proceeds using catalysts mixed at different mixing ratios of a titanium-based catalyst and an antimony-based catalyst as a polycondensation catalyst according to the present invention.

FIG. 2 is a graph of comparing the time taken to complete a polycondensation reaction when the reaction proceeds using catalysts mixed at different mixing ratios of a titanium-based catalyst and an antimony-based catalyst as a polycondensation catalyst according to the present invention.

[Modes of the Invention]

Hereinafter, the present invention will be described in further detail.

As described above, the conventional polyester fiber has a problem of low safety such as toxicity the human body due to an antimony-based catalyst used in the manufacturing process thereof, and when a polyester resin is polymerized using a non-antimony-based catalyst, there is a problem of degrading physical properties such as color tone deposition and the like.

Therefore, the present inventors are intended to provide a polyester fiber that solves the above problems by providing a polyester resin including a copolyester which is formed by polycondensation of an acid component including terephthalic acid (TPA); and a diol component including ethylene glycol and further including a diol compound represented by the following Chemical Formula 1 and has a terminal carboxyl group (-COOH) content of 45 eq./$10^6$ g or less, wherein the polyester resin includes antimony (Sb) in an amount of 10 ppm or less.

[Chemical Formula 1]

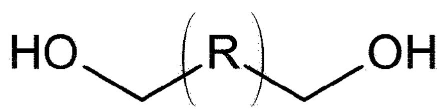

In Chemical Formula 1 and Chemical Formula 2, R is $-(C(CH_3)_aH_{2-a})-$ or $-(CH_2OCH_2)-$, wherein a is 1 or 2.

The present invention has the advantage of significantly reducing the harmfulness caused by heavy metals, which are carcinogens, because the polyester resin is prepared so that antimony is included in a small amount of 10 ppm or less in the polyester resin as described above. Also, it is possible to prepare an excellent polymer resin by reducing a terminal group content. When an antimony content exceeds 10 ppm, it is not suitable for use in materials that come into contact with the human body, especially, nonwoven fabrics for sanitary products.

In addition, when a terminal group content in the polyester resin exceeds 45 eq./$10^6$ g, the hydrolysis resistance of the final polyester fiber product manufactured using the polyester resin is decreased. Therefore, a terminal group

(-COOH) content in the polyester resin is preferably 20 eq./$10^6$ g or less, and more preferably, 5 to 15 eq./$10^6$ g.

Preferably, the polyester resin may be substantially free of antimony. Here, being substantially free of antimony means that an antimony-based compound is not added as a reagent or a raw material in the preparation of the resin, and does not mean that antimony, which is unintentionally included in the form of impurities, is not contained in a raw material. An antimony content, including the unintended antimony, in the resin needs to be 10 ppm or less. Preferably, the antimony content is 3 to 10 ppm.

Hereinafter, the acid component and diol component for preparing the polyester resin will be described.

The acid component includes terephthalic acid (TPA).

In addition, the acid component may further include one or more polycarboxylic acid compounds selected from $C_{6\sim14}$ aromatic polycarboxylic acids and $C_{2\sim14}$ aliphatic polycarboxylic acids in addition to TPA.

Preferably, the acid component further includes a sulfonate metal salt.

As the $C_{6\sim14}$ aromatic polycarboxylic acid, any compound known as a polycarboxylic acid compound used in the preparation of a polyester resin may be selected without limitation. Preferably, the $C_{6\sim14}$ aromatic polycarboxylic acid is any one or more selected from the group consisting of dimethyl terephthalate, isophthalic acid (IPA), and dimethyl isophthalate, and more preferably, isophthalic acid is selected in terms of reaction stability with TPA, ease of handling, and economic efficiency.

As the $C_{2\sim14}$ aliphatic polycarboxylic acid, any compound known as a polycarboxylic acid used in the preparation of polyester may be selected without limitation. As a non-limiting example, the $C_{2\sim14}$ aliphatic polycarboxylic acid may be any one or more selected from oxalic acid, malonic acid, succinic acid, glutaric acid, adipic acid, suberic acid, citric acid, pimelic acid, azelaic acid, sebacic acid, pelargonic acid (nonanoic acid), decanoic acid, lauric acid (dodecanoic acid), and palmitic acid (hexadecanoic acid).

The dicarboxylic acid component, other than terephthalic acid, included in the acid component is preferably isophthalic acid. The acid component preferably includes terephthalic acid in an amount of 80 mol% or more relative to the total content of the acid component.

In an exemplary embodiment of the present invention, the polyester resin may include titanium (Ti) in an amount of 5 ppm to 30 ppm. Since the polyester resin according to the present invention is preferably prepared by performing a polycondensation reaction using a titanium-based catalyst, especially, a catalyst including a titanium-based chelating compound, without using an antimony-based catalyst, the above-described amount of titanium may remain in the resulting polyester resin, and since titanium has low toxicity to the human body compared to heavy metals such as antimony, safe polyester fibers can be manufactured.

In an exemplary embodiment of the present invention, the polyester resin may have a melting point ($T_m$) of 220 °C to 255 °C and a glass transition temperature ($T_g$) of 60 °C to 75 °C. The polyester resin is preferably amorphous. Accordingly, the polyester resin can exhibit an excellent fiber adhesion function when manufactured into fibers, and can realize a good tactile sensation of the adhesion site after adhesion.

When a glass transition temperature is less than 60 °C, fusion between fibers may occur during the stretching process or transportation of the fibers, and when a glass transition temperature exceeds 75 °C, manufacturing may be practically difficult due to the material properties of a resin.

In an exemplary embodiment of the present invention, the diol component may include ethylene glycol in an amount of 60 mol% to 90 mol%. Also, the diol component may include a diol compound in an amount of 10 mol% to 40 mol% in addition to ethylene glycol.

The diol compound is a compound represented by the following Chemical Formula 1.

[Chemical Formula 1]

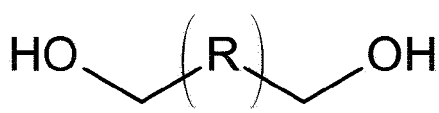

In Chemical Formula 1, R is $-(C(CH_3)_aH_{2-a})-$ or $-(CH_2OCH_2)-$, wherein a is 1 or 2.

Preferably, the diol component may include two or more compounds selected from compounds represented by the following Chemical Formulas 1-1 to 1-3 as the diol compound in addition to ethylene glycol.

[Chemical Formula 1-1]

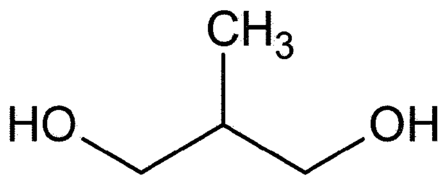

[Chemical Formula 1-2]

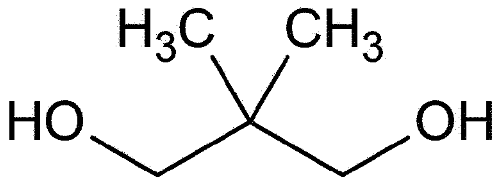

[Chemical Formula 1-3]

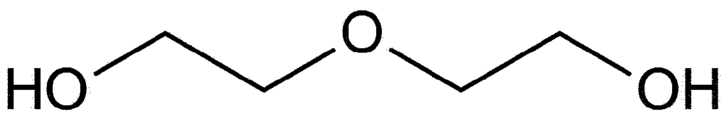

Preferably, the compound represented by Chemical Formula 1-1 may be included in an amount of 13 to 40 mol%, preferably 20 to 40 mol%, and more preferably 30 to 40 mol% relative to the total content of the diol component. When the content of the compound represented by Chemical Formula 1-1 is less than 13 mol%, excellent spinnability is exhibited in the manufacture of fibers by spinning the polyester resin, but there are disadvantages in which an adhesion temperature may increase or thermal adhesiveness may decrease, and the temperature of use is limited.

In addition, when the content of the compound represented by Chemical Formula 1-1 exceeds 40 mol%, commercialization may be difficult due to a decrease in spinnability, and thermal adhesiveness may be degraded due to an increase in crystallinity. Meanwhile, when 20 mol% of the compound represented by Chemical Formula 1-1 participates in the reaction, the low-temperature thermal adhesiveness of polyester fibers formed by spinning a polyester resin prepared by reaction along with the compound of Chemical Formula 1-2 or 1-3 can be improved.

The compound represented by Chemical Formula 1-2 may be included in an amount of 0.1 to 5 mol% relative to the total content of the diol component, and the compound represented by Chemical Formula 1-3 may be included in an amount of 0.1 to 20 mol% relative to the total content of the diol component.

When the ethylene glycol content in the diol component is less than 60 mol%, the polymerization reactivity and spinnability of polyester may be significantly degraded, and the crystallinity of the resulting polyester may increase, and thus it may be difficult to exhibit high thermal adhesiveness at a desired temperature. On the other hand, when an ethylene glycol content exceeds 90 mol%, the crystallinity of the resulting polyester resin increases, and thus an excessively high melting point is exhibited, or it is difficult to realize a low softening point. As a result, a thermal adhesion temperature may significantly increase, and thermal adhesiveness may not be realized at low temperature.

In addition, the diol component may further include other types of diol compounds in addition to ethylene glycol and the compounds represented by Chemical Formulas 1-1 to 1-3.

As such other types of diol compounds, any diol compound known to be used in the preparation of polyester may be used without particular limitation. As a non-limiting example, the diol compound may be a $C_{2\sim14}$ aliphatic diol compound and may specifically be any one or more selected from the group consisting of 1,3-propanediol, 1,4-butanediol, 1,6-hexanediol, tetramethylene glycol, pentamethyl glycol, hexamethylene glycol, heptamethylene glycol, octamethylene glycol, nonamethylene glycol, decamethylene glycol, undecamethylene glycol, dodecamethylene glycol, and tridecamethylene glycol.

In an exemplary embodiment of the present invention, the polyester resin may have an intrinsic viscosity of 0.5 dl/g to 0.8 dl/g. When the intrinsic viscosity of the polyester resin is less than 0.5 dl/g, it may be difficult to manufacture a fiber with a desired shape by spinning, and when the intrinsic viscosity thereof exceeds 0.9 dl/g, pack pressure excessively increases during fiber spinning, and thus spinning workability may be degraded, or thermal adhesiveness may be degraded in the manufacture of composite fibers.

In an exemplary embodiment of the present invention, the polyester resin may further include a complementary

coloring agent. Conventionally, it was common to use a cobalt compound as the complementary coloring agent, but the cobalt compounds are not preferable because they cause interstitial pulmonary fibrosis and thus are harmful to the human body and are classified as human carcinogens, and it is preferable to use a non-cobalt-based complementary coloring agent. Preferably, any non-cobalt-based complementary coloring agent used as a complementary coloring agent in the art may be selected without limitation.

The complementary coloring agent is preferably included in an amount of 1 ppm to 10 ppm based on the total weight of the finally prepared polyester resin composition, and a mixture of blue and red dyes is preferably used in an amount of 1 ppm to 10 ppm.

When the complementary coloring agent is included in the above amount, an appropriate b value of the L*a*b color system is obtained, and thus polyester fibers having a high whiteness index can be manufactured.

In addition, in an exemplary embodiment of the present invention, the polyester resin may further include a phosphorus compound. The phosphorus compound serves as a thermal stabilizer, and as the phosphorus compound, phosphoric acid, phosphates such as monomethyl phosphate, trimethyl phosphate, and triethyl phosphate, or derivatives thereof are preferably used. Among them, particularly, trimethyl phosphate or triethyl phosphate is preferred due to its excellent effect.

The phosphorus compound is preferably included so that the weight of phosphorus atoms is 10 ppm to 30 ppm with respect to the total content of the prepared resin. When the phosphorus compound is included so that the weight of phosphorus (P) atoms is less than 10 ppm, physical properties may be degraded due to excessive side reactions. On the other hand, when the phosphorus compound is included so that the weight of phosphorus (P) atoms exceeds 30 ppm, the reaction rate may slow down.

In addition, in an exemplary embodiment of the present invention, the polyester resin may further include a deodorant. As the deodorant, a photocatalytic oxide doped with a transition metal may be used, and although there is no particular limitation on the type of transition metal, two or more selected from the group consisting of zinc (Zn), manganese (Mn), iron (Fe), copper (Cu), nickel (Ni), cobalt (Cr), vanadium (V), zirconium (Zr), molybdenum (Mo), silver (Ag), tungsten (W), bismuth (Bi), platinum (Pt), and gold (Au) are preferably used in consideration of reactivity. Specific examples of the photocatalytic oxide include $TiO_2$, $SrTiO_3$, ZrO, $SnO_2$, $WO_3$, $Bi_2O_3$, and $Fe_2O_3$, and particularly, $TiO_2$ is preferred, and it is more preferable to use $TiO_2$ having an anatase structure.

Hereinafter, a method of preparing the above-described polyester resin will be described. Descriptions that overlap with the above description of the polyester resin will be omitted.

The present invention provides a method of preparing a polyester resin, which includes performing a polycondensation reaction of an acid component including terephthalic acid and further including one or more of $C_{6\sim14}$ aromatic polycarboxylic acids and $C_{2\sim14}$ aliphatic polycarboxylic acids; and a diol component including ethylene glycol and further including a diol compound represented by the following Chemical Formula 1 in the presence of a catalyst including a compound represented by the following Chemical Formula 2.

[Chemical Formula 1]

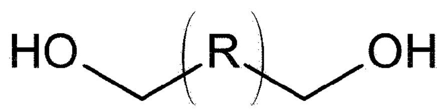

[Chemical Formula 2]

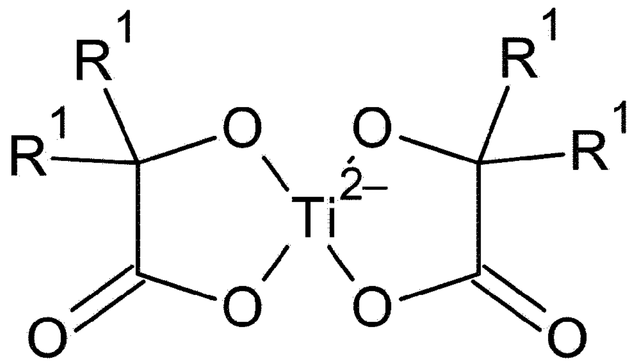

In Chemical Formula 1, R is $-(C(CH_3)_aH_{2-a})-$ or $-(CH_2OCH_2)-$, wherein a is 1 or 2, and in Chemical Formula 2, $R^1$ is $-(CH_2)_nCOOH$, wherein n is 1 to 8.

In the method of preparing a polyester resin according to the present invention, the polycondensation reaction is possible even at low temperature using a titanium-based chelating compound as a catalyst, and accordingly, thermal decomposition may be prevented from occurring. Also, since polymerization reactivity is excellent even at low temperature, a terminal group (-COOH) content may be reduced due to a relatively high degree of polymerization, and thus an excellent polyester resin can be prepared.

In an exemplary embodiment of the present invention, the polycondensation reaction may be performed by adding the catalyst to the reactants so that a titanium atom content is 10 ppm to 20 ppm. When the titanium atom content is less than 10 ppm, the reaction rate slows down, and thus productivity may decrease. On the other hand, when the titanium atom content exceeds 20 ppm, although reactivity is sufficient, the catalyst may act as a foreign substance, and thus physical properties, such as mechanical strength and thermal adhesiveness, of a fiber manufactured by spinning the prepared polyester resin may be degraded.

Preferably, in the method of preparing a polyester resin according to the present invention, an antimony (Sb)-based catalyst may not be used. When an antimony-based catalyst is not used, antimony may be hardly detected in the prepared polyester resin and polyester fibers manufactured by spinning the polyester resin, and polyester fibers, which are suitable for use as a material for products that come into contact with the human body by not including antimony, which is harmful to the human body, can be manufactured.

In an exemplary embodiment of the present invention, the polycondensation reaction may be performed by adding the acid component and the diol component in a molar ratio of 1:1 to 1:1.5. When the molar percentage of the acid component exceeds 1:1, acidity is excessively increased during polymerization, and thus side reactions may be promoted, and when the molar percentage of the acid component is less than 1:1.5, the degree of polymerization may be insufficient.

The present invention also provides a thermo-adhesive polyester fiber manufactured by spinning the above-described polyester resin according to the present invention and having a b value of 2.5 to 8 in the L*a*b color system.

When the b value is adjusted within a range of 2.5 to 8, a high whiteness index can be obtained. When the b value is less than 2.5, the color may become bluish, and when the b value exceeds 8, the color may become yellowish.

According to an embodiment of the present invention, the thermo-adhesive polyester fiber is preferably a sheath-core-type composite fiber. The sheath-core-type composite fiber is preferably manufactured by spinning the polyester resin according to the present invention into a sheath. Therefore, it is possible to provide fibers having excellent mechanical strength and shape retention by including fibers with a relatively high melting point in the core while maintaining the thermal adhesiveness of the sheath.

Hereinafter, the present invention will be described in further detail by way of examples. However, the following examples are only exemplary and the scope of the present invention is not limited thereto. It should be understood by those skilled in the art that components may be added, modified, or eliminated without departing from the technical spirit and the scope of the present invention.

<Examples>

Example 1

An acid component including 70 mol% of terephthalic acid (TPA) and 30 mol% of isophthalic acid (IPA) and a diol component including 12 mol% of a compound represented by the following Chemical Formula 1-3 and 88 mol% of ethylene glycol (EG) were input into an esterification tank in a molar ratio of 1:1.2 and then allowed to react at 250 °C and 1140 Torr to obtain an esterification product. The formed esterification product was transferred to a polycondensation reactor, an organic complementary coloring agent formed by mixing blue and red dyes was added in an amount of 10 ppm relative to the esterification product, 15 ppm (based on Ti element content) of a compound represented by the following Chemical Formula 2 as a polycondensation catalyst and 25 ppm (based on P element content) of triethyl phosphate as a thermal stabilizer were added, and a polycondensation reaction was performed by raising the temperature to 280 °C while gradually reducing the pressure so that the final pressure became 0.5 Torr, thereby preparing a polyester resin.

[Chemical Formula 1-3]

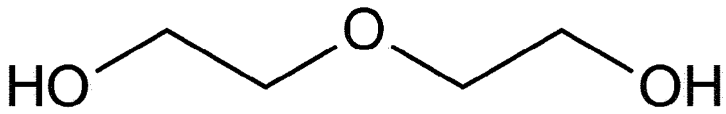

[Chemical Formula 2]

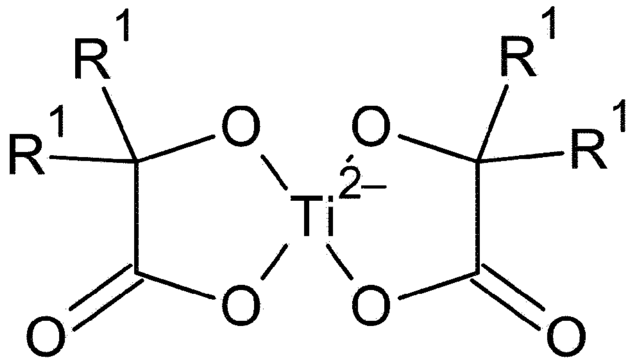

In Chemical Formula 2, $R^1$ is $-(CH_2)_nCOOH$, wherein n is 1 to 8.

Examples 2 to 9

A polyester resin was prepared in the same manner as in Example 1, except that the composition of reactants varied as shown in Table 1 below.

Comparative Example 1

A polyester resin was prepared in the same manner as in Example 1, except that the composition of reactants varied as shown in Table 1 below.

[Table 1]

| Classification | Acid component (mol%) | | Diol component (mol%) | | | | Catalyst (type/ content) |
|---|---|---|---|---|---|---|---|
| | TPA | IPA | E-10 | NPG | DEG | EG | |
| Example 1 | 70 | 30 | 0 | 0 | 12 | 88 | Chemical formula 10 to 20 ppm |
| Example 2 | 60 | 40 | 0 | 0 | 12 | 88 | |
| Example 3 | 95 | 5 | 0 | 0 | 12 | 88 | |
| Example 4 | 50 | 50 | 0 | 0 | 12 | 88 | |
| Example 5 | 100 | 0 | 0 | 0 | 12 | 88 | |
| Example 6 | 70 | 30 | 0 | 0 | 45 | 55 | |
| Example 7 | 70 | 30 | 33 | 3 | 0 | 64 | |
| Example 8 | 70 | 30 | 36 | 2 | 0 | 62 | |
| Example 9 | 70 | 30 | 36 | 1 | 0 | 63 | |
| Comparative Example 1 | 70 | 30 | 0 | 0 | 12 | 88 | $Sb_2O_3$ 250 ppm |

* In Table 1, TPA refers to terephthalic acid, IPA refers to isophthalic acid, E-10 refers to 1,3-propanediol, NPG refers to neopentyl glycol, DEG refers to diethylene glycol, and EG refers to ethylene glycol.

Manufacturing Examples

In order to manufacture a sheath-core-type composite fiber including each polyester resin prepared according to Examples 1 to 9 and Comparative Example 1 as a sheath and polyethylene terephthalate as a core, composite spinning was performed using a sheath-core-type spinneret at a spinning temperature of 275 °C and a spinning rate of 1000 mpm so that a weight ratio of the core and the sheath were 5:5, and 3.0x stretching was performed to manufacture a thermo-adhesive polyester fiber with a length of 51 mm and a fineness of 4.0 denier. The respective polyester composite fibers according to the examples were referred to as Manufacturing Examples 1 to 9, and the polyester composite fiber according to the comparative example was referred to as Comparative Manufacturing Example 1.

<Experimental Examples>

Experimental Example 1: Measurement of melting point and glass transition temperature

The glass transition temperature of each polyester resin prepared in the examples and the manufacturing example was measured using a differential thermal analyzer, and measurement was performed at a temperature increase rate of 20 °C/min. Measurement results are shown in Table 2 below.

Experimental Example 2: Measurement of intrinsic viscosity (I.V.)

Each polyester resin prepared in the examples and the comparative example was melted in an ortho-chlorophenol solvent at a temperature of 110 °C and a concentration of 2.0 g/25 mL for 30 minutes, and intrinsic viscosity (I.V.) was measured at a constant temperature of 25 °C for 30 minutes using an automatic viscosity measuring device connected to a CANON viscometer. Measurement results are shown in Table 2 below.

Experimental Example 3: Quantification of terminal carboxyl group

The terminal carboxyl group (-COOH) content of each polyester resin prepared in the examples and the comparative example was measured by the Phol method. 0.15 g of polyester resin powder ground to a size of 20 mesh was precisely measured and input into a test tube, 5 ml of benzyl alcohol was added, and the mixture was dissolved by heating at 210 °C for 150 seconds while stirring using a micro stirrer. Immediately after dissolution, the test tube was rapidly cooled by immersion in 25 °C water for 7 seconds, and the content was poured into a 50 ml beaker containing 10 ml of chloroform. Then, 5 ml of benzyl alcohol was input again into the test tube, the test tube was completely rinsed while stirring for 60 seconds, the residual polyester resin solution was input into the beaker and was used as a titrant. The carboxyl group content was calculated according to Equation 1 by subjecting a 0.1N sodium hydroxide benzyl alcohol solution to neutralization titration with a microsyringe (volume 100 $\mu$l) using phenol red (a 0.1% benzyl alcohol solution) as an indicator and correcting the titration determination value according to the blank test result for a titration reagent

$$\text{Terminal group context (eq./}10^6\text{ g)}=[\text{Volume of titrant }(\mu\text{l}) - \text{Blank test result }(\mu\text{l})\times 0.1\times f]/(\text{Weight of polyester resin sample}) \quad \text{[Equation 1]}$$

In Equation 1, f represents the concentration factor of the 0.1N sodium hydroxide benzyl alcohol solution.

Measurement results are shown in Table 2 below.

Experimental Example 4: Adhesive strength

Each polyester composite fiber manufactured in the manufacturing examples and the comparative manufacturing example and polyethylene terephthalate (PET) single fiber (fiber length: 51 mm, fineness: 4.0 denier) were mixed in a ratio of 5:5, spread, and then thermally treated at 120 °C, 140 °C, and 160 °C to produce a hot melt nonwoven fabric having a basis weight of 35 g/m$^2$. The nonwoven fabric was processed to produce a sample having a width, length, and thickness of 100 mm, 20 mm, and 10 mm, and the adhesive strength of the sample was measured in accordance with the KS M ISO 36 test method using a universal testing machine (UTM). Meanwhile, when the shape was deformed due to excessive shrinkage during thermal treatment, adhesive strength was evaluated as shape deformation.

Measurement results are shown in Table 2 below.

Experimental Example 5: Spinning workability

In the manufacture of the polyester composite fiber using each polyester resin prepared in the examples and the comparative example as in the manufacturing examples, the number of drips (lumps formed by partial fusion of fiber strands passing through a spinneret or irregular fusion of strands after thread breakage) generated during the spinning process was counted using a drip detector, the number of drips generated in Example 1 was set as 100, and the number of drips generated in the remaining examples and comparative example was expressed as a relative percentage based on Example 1. Measurement results are shown in Table 2 below.

Experimental Example 6: Gas reduction rate

A nonwoven fabric having a size of 10 cm×10 cm was manufactured using each polyester composite fiber manufactured in the manufacturing examples and the comparative manufacturing example and input into a 3L Tedlar bag, target gas and clean air were injected into the bag, and the bag was sealed. 120 minutes later, each concentration was measured using a Gastec gas detector tube system, a gas reduction rate was calculated according to the following Equation 2, and results are shown in Table 2 below.

[Equation 2]

$$\text{Reduction rate (\%)} = (C_b - C_a) / (C_b) \times 100$$

In Equation 2, $C_a$ represents the sample concentration, and $C_b$ represents the blank test concentration.

Experimental Example 7: Evaluation of color tone

The b value of each polyester composite fiber according to Manufacturing Examples 1 to 9 and Comparative Manufacturing Example 1 in the L*a*b color system was measured using a CM-3600D spectrophotometer.

The measured values are shown in Table 2 below.

Experimental Example 8: Measurement of residual antimony content

The content of antimony (Sb) included in each polyester resin prepared according to Examples 1 to 9 and Comparative Example 1 was measured by the following method, and the measured values are shown in Table 2 below.

[Measurement method]

Measurement was performed by elemental quantitative analysis using ICP. Specifically, each polyester resin sample according to Examples 1 to 9 and Comparative Example 1 was pre-treated (nitric acid or hydrofluoric acid) to decompose the sample, and chemical elements were detected using inductively coupled plasma optical emission spectroscopy (ICP-OES) analysis equipment.

[Table 2]

| Classification | Glass transition temperature (°C) | Terminal group content (eq./$10^6$ g) | Spinning workability | Adhesive strength (kgf/$cm^2$) | Intrinsic viscosity | VOCs (ppb) | b-value in L*a*b color system | Sb content (ppm) |
|---|---|---|---|---|---|---|---|---|
| Example 1 (Manufacturing Example 1) | 67.5 | 11.2 | 100 | 158 | 0.64 | 1553 | 2-4 | 3.4 |
| Example 2 (Manufacturing Example 2) | 63.4 | 19.2 | 107 | 161 | 0.61 | 1521 | 3-6 | 5.9 |
| Example 3 (Manufacturing Example 3) | 68.1 | 17.8 | 98 | 150 | 0.6 | 1501 | 3-7 | 5.3 |

(continued)

| Classification | Glass transition temperature (°C) | Terminal group content (eq./$10^6$ g) | Spinning workability | Adhesive strength (kgf/$cm^2$) | Intrinsic viscosity | VOCs (ppb) | b-value in L*a*b color system | Sb content (ppm) |
|---|---|---|---|---|---|---|---|---|
| Example 4 (Manufacturing Example 4) | 61.8 | 25.1 | 126 | 154 | 0.6 | 1596 | 3-6 | 7.2 |
| Example 5 (Manufacturing Example 5) | 72.5 | 28.6 | 118 | 156 | 0.6 | 1611 | 3-7 | 8.1 |
| Example 6 (Manufacturing Example 6) | 67.2 | 20.8 | 104 | 155 | 0.6 | 1526 | 2-5 | 6.1 |
| Example 7 (Manufacturing Example 7) | 67.8 | 17.9 | 93 | 155 | 0.6 | 1532 | 2-4 | 5.5 |
| Example 8 (Manufacturing Example 8) | 68.0 | 14.2 | 89 | 155 | 0.6 | 1537 | 2-4 | 4.1 |
| Example 9 (Manufacturing Example 9) | 69.5 | 21.4 | 95 | 155 | 0.6 | 1545 | 3-6 | 6.3 |
| Comparative Example 1 (Comparative Manufacturing Example 1) | 73.6 | 42.1 | 82 | 161 | 0.68 | 1582 | 3-7 | >10 |

Referring to Table 2, it can be confirmed that all of the polyester fibers manufactured using the polyester resins according to Examples 1 to 9 of the present invention exhibited excellent physical properties in terms of glass transition temperature and terminal group content. Although the fiber of Comparative Example 1, in which the polyester resin was polymerized using an antimony-based catalyst, is similar in terms of physical properties of the fiber, the polyester fibers according to the examples and manufacturing examples have a low content of antimony remaining in the fiber by not using an antimony-based catalyst, and thus exhibit significantly low harmfulness to the human body.

In addition, it can be seen that the polyester fibers according to the examples and manufacturing examples exhibit excellent hydrolysis resistance by having a low terminal carboxyl group content compared to the fiber manufactured using an antimony-based catalyst.

## Claims

**1.** A polyester resin comprising a copolyester which is formed by polycondensation of an acid component including terephthalic acid (TPA); and a diol component including ethylene glycol and further including a diol compound represented by the following Chemical Formula 1 and has a terminal carboxyl group (-COOH) content of 45 eq./$10^6$ g or less,

wherein the polyester resin includes antimony (Sb) in an amount of 10 ppm or less:

[Chemical Formula 1]

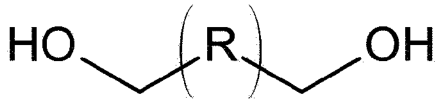

in Chemical Formula 1, R is $-(C(CH_3)_aH_{2-a})-$ or $-(CH_2OCH_2)-$, wherein a is 1 or 2.

2. The polyester resin of claim 1, wherein the acid component further includes one or more polycarboxylic acid compounds selected from $C_{6\sim14}$ aromatic polycarboxylic acids and $C_{2\sim14}$ aliphatic polycarboxylic acids in addition to terephthalic acid.

3. The polyester resin of claim 1, wherein the polyester resin includes titanium (Ti) in an amount of 5 ppm to 30 ppm.

4. The polyester resin of claim 1, wherein the polyester resin has a melting point ($T_m$) of 220 °C to 255 °C and a glass transition temperature ($T_g$) of 60 °C to 75 °C.

5. The polyester resin of claim 1, wherein the acid component includes terephthalic acid in an amount of 80 mol% or more, and the diol component includes ethylene glycol in an amount of 60 mol% to 90 mol%.

6. The polyester resin of claim 1, wherein the polyester resin includes a mixture of blue and red dyes as a complementary coloring agent in an amount of 1 ppm to 10 ppm.

7. A method of preparing a polyester resin, comprising:
performing a polycondensation reaction of an acid component including terephthalic acid and further including one or more of $C_{6\sim14}$ aromatic polycarboxylic acids and $C_{2\sim14}$ aliphatic polycarboxylic acids; and a diol component including ethylene glycol and further including a diol compound represented by the following Chemical Formula 1 in presence of a catalyst including a compound represented by the following Chemical Formula 2:

[Chemical Formula 1]

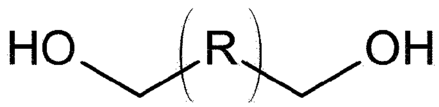

[Chemical Formula 2]

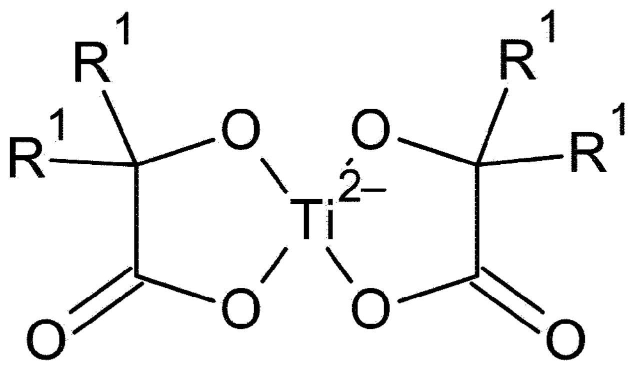

in Chemical Formula 1, R is $-(C(CH_3)_aH_{2-a})-$ or $-(CH_2OCH_2)-$, wherein a is 1 or 2, and in Chemical Formula 2, $R^1$ is $-(CH_2)_nCOOH$, wherein n is 1 to 8.

8. The method of claim 7, wherein the polycondensation reaction is performed by adding the catalyst to the reactants so that a titanium atom content is 10 ppm to 20 ppm.

**9.** The method of claim 7, wherein the polycondensation reaction is performed by adding the acid component and the diol component in a molar ratio of 1: 1 to 1:1.5.

**10.** A thermo-adhesive polyester fiber manufactured by spinning the polyester resin according to any one of claim 1 to claim 6 and having a b value of 2.5 to 8 in the L*a*b color system.

[Fig. 1]

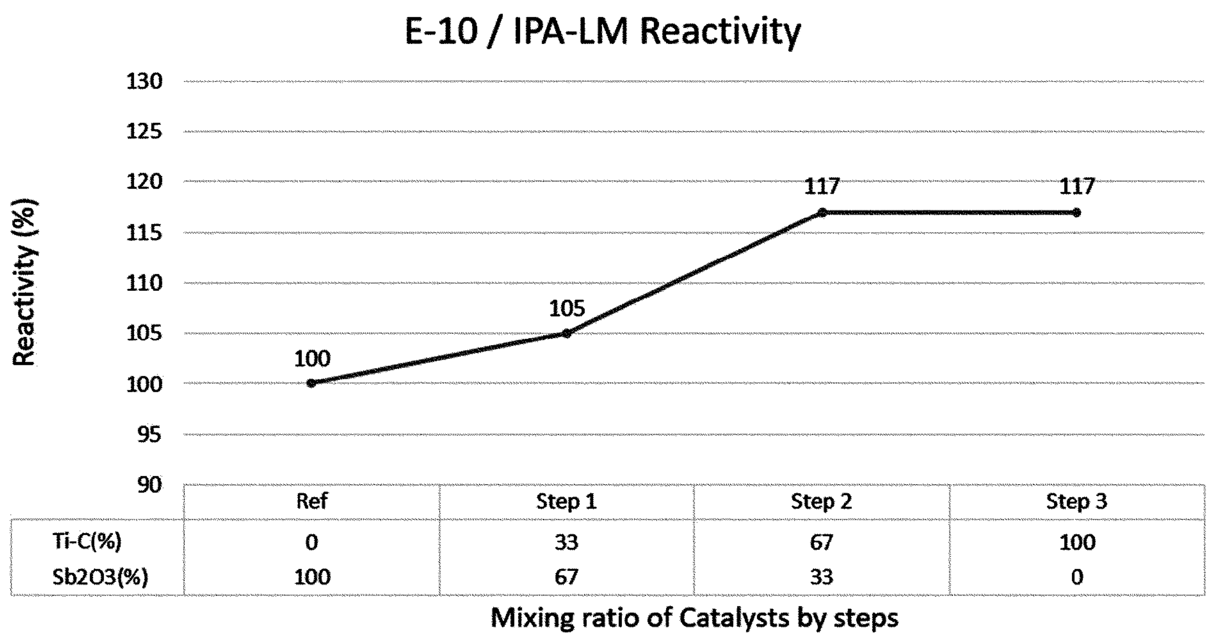
E-10 / IPA-LM Reactivity
Reactivity (%)
130
125
120
115
110
105
100
95
90
100
105
117
117
Ref
Step 1
Step 2
Step 3
Ti-C(%)
0
33
67
100
Sb2O3(%)
100
67
33
0
Mixing ratio of Catalysts by steps

[Fig. 2]

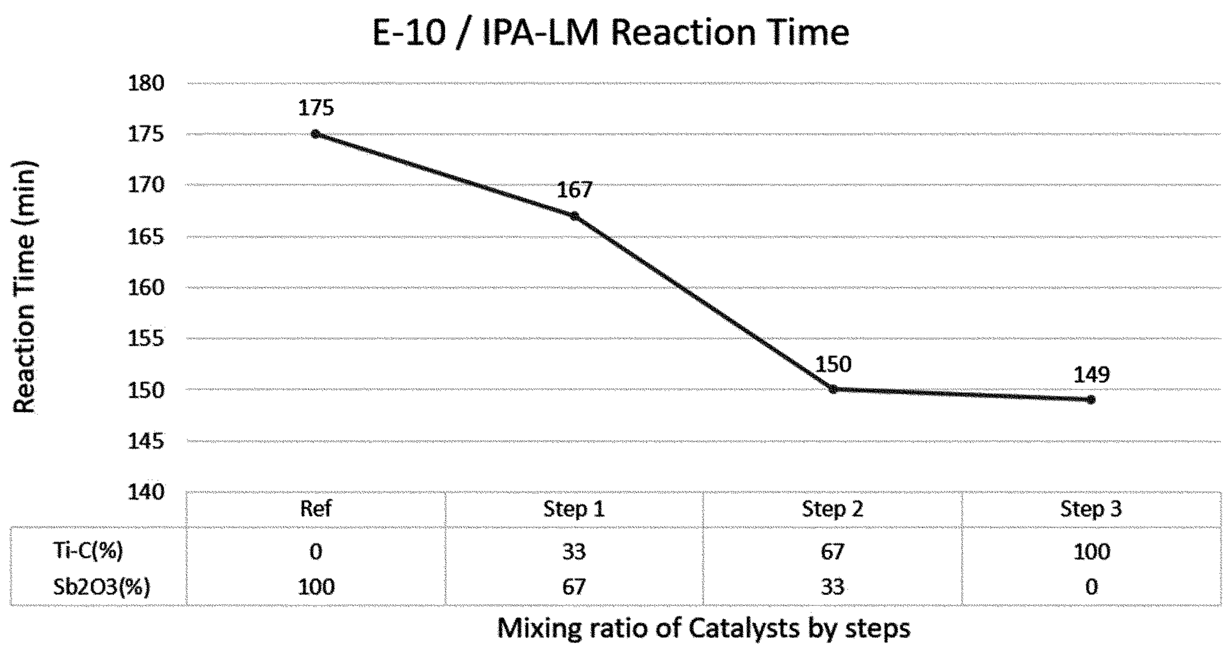
E-10 / IPA-LM Reaction Time
Reaction Time (min)
180
175
170
165
160
155
150
145
140
175
167
150
149
Ref
Step 1
Step 2
Step 3
Ti-C(%)
0
33
67
100
Sb2O3(%)
100
67
33
0
Mixing ratio of Catalysts by steps

## INTERNATIONAL SEARCH REPORT

International application No.
**PCT/KR2022/010643**

**A. CLASSIFICATION OF SUBJECT MATTER**

**C08G 63/16**(2006.01)i; **C08G 63/183**(2006.01)i; **C08G 63/85**(2006.01)i; **D01F 6/62**(2006.01)i

According to International Patent Classification (IPC) or to both national classification and IPC

**B. FIELDS SEARCHED**

Minimum documentation searched (classification system followed by classification symbols)

C08G 63/16(2006.01); B29C 55/12(2006.01); B32B 7/12(2006.01); C08G 63/183(2006.01); C08G 63/86(2006.01); C08G 63/91(2006.01); C09J 167/02(2006.01); D01D 13/00(2006.01); D01D 5/34(2006.01); D01F 6/84(2006.01); D01F 8/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 안티몬(antimony, Sb), 티타늄(titanium), 촉매(catalyst), 폴리에스테르(polyester), 디에틸렌글리콜(diethylene glycol)

**C. DOCUMENTS CONSIDERED TO BE RELEVANT**

| Category* | Citation of document, with indication, where appropriate, of the relevant passages | Relevant to claim No. |
|---|---|---|
| Y | JP 08-245771 A (DIAFOIL CO., LTD.) 24 September 1996 (1996-09-24)<br>See claim 1; paragraphs [0001] and [0040]; and table 1. | 1-10 |
| Y | KR 10-2219081 B1 (TORAY ADVANCED MATERIALS KOREA INC.) 22 February 2021 (2021-02-22)<br>See claim 1; paragraphs [0001], [0075], [0081]-[0087], [0091] and [0129]-[0137]; and tables 1-3. | 1-10 |
| A | KR 10-2011-0116455 A (WOONGJIN CHEMICAL CO., LTD.) 26 October 2011 (2011-10-26)<br>See claims 1-10. | 1-10 |
| A | KR 10-1781938 B1 (HUVIS CORPORATION) 26 September 2017 (2017-09-26)<br>See claim 1; paragraph [0047]; and table 1. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2022** | **11 November 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2022/010643

C. DOCUMENTS CONSIDERED TO BE RELEVANT

| Category* | Citation of document, with indication, where appropriate, of the relevant passages | Relevant to claim No. |
|---|---|---|
| A | CN 105585705 A (CHINA PETROLEUM & CHEMICAL CORPORATION et al.) 18 May 2016 (2016-05-18) See claims 1-13; and table 3. | 1-10 |
| A | CN 108998850 A (JIANGSU JIANGNAN GAOXIAN CO., LTD.) 14 December 2018 (2018-12-14) See claims 1-5. | 1-10 |

Form PCT/ISA/210 (second sheet) (July 2022)

**INTERNATIONAL SEARCH REPORT**
**Information on patent family members**

International application No.
**PCT/KR2022/010643**

| Patent document cited in search report | Publication date (day/month/year) | Patent family member(s) | Publication date (day/month/year) |
|---|---|---|---|
| JP 08-245771 A | 24 September 1996 | JP 3507572 B2 | 15 March 2004 |
| KR 10-2219081 B1 | 22 February 2021 | WO 2021-071251 A1 | 15 April 2021 |
| KR 10-2011-0116455 A | 26 October 2011 | KR 10-1201389 B1 | 15 November 2012 |
| KR 10-1781938 B1 | 26 September 2017 | None | |
| CN 105585705 A | 18 May 2016 | None | |
| CN 108998850 A | 14 December 2018 | None | |

Form PCT/ISA/210 (patent family annex) (July 2022)